# EUROPEAN PATENT APPLICATION

(11) **EP 1 422 202 A1**
(43) Date of publication of application: **26.05.2004**
(21) Application number: 02360324.4
(22) Date of filing: 25.11.2002
(51) Int. Cl.: C03C 13/04, C03B 37/014, C03B 37/018

(54) **Method of fabricating an optical fiber**

(71) Applicant: ALCATEL, 75008 Paris (FR)
(72) Inventor: Leppert, Hans-Detlef, 41189 Mönchengladbach (DE)
(74) Representative: KOHLER SCHMID + PARTNER

(57) **Abstract**

In a method of fabricating an optical fiber (6) comprising a silica-based glassy material deuterium is injected in a fiber drawing device (1). Defect centers generated during the fiber drawing are occupied by deuterium atoms.

## Description

### Background of the invention

The invention relates to a method of fabricating an optical fiber comprising a silica-based glassy material.

Long distance optical communications has made great progress, primarily due to the availability of low-loss optical fiber. As is well known, electromagnetic radiation travelling through an optical waveguide, a fiber, is subject to attenuation due to several mechanisms. Although some of these are essentially irreducible, such as the so-called Rayleigh scattering, others can be eliminated or at least substantially reduced. Among the latter is attenuation due to absorption by impurities present in the guiding region of the fiber.

A particularly important absorbing species is the hydroxyl radical (OH-), which is formed when hydrogen is present in the fiber material. OH present in silica-based optical fiber causes, inter alia, absorption of electromagnetic radiation of wavelengths in the region of current interest for long-distance optical communication, i.e., the wavelength region of about 0.8 to 1.6 µm. The OH absorption peaks in this wavelength region are due to overtones or combination tones of vibrations at longer wavelengths. For instance, the peaks at about 1.38 and 0.95 µm are caused by overtones of the fundamental OH frequency at about 2.75 µm, whereas the peak at about 1.24 µm is due to a combination tone due to OH and a vibration frequency of SiO₂.

Although recently great progress has been achieved in reducing the OH-content of the guiding region of silica-based optical waveguides, the so-called core, by "drying" with, e.g., chlorine, other approaches for reducing the OH-caused loss are clearly of interest. In principle, one such other approach comprises shifting the relevant vibration modes of OH to longer wavelengths, thereby reducing the absorption due to OH in the wavelength region of interest. Such a shift to longer wavelengths would occur if a heavier atom could be substituted for hydrogen in OH, since typically such substitution causes a decrease in the vibrational frequencies proportional to approximately the square root of the ratio of the masses. In particular, substituting deuterium for hydrogen would have the desired effect, since the former has approximately double the mass of the latter. Of course, such deuterium/hydrogen (D/H) exchange results in the appearance of OD absorption lines in the relevant wavelength regime. However, these lines are due to higher overtones, and thus weaker by typically 1-2 orders of magnitude.

It is well known that both hydrogen and deuterium diffuse readily in vitreous silica, and that at elevated temperatures, as well as under other conditions (e.g., irradiation with energetic electromagnetic radiation, typically of wavelength ~100 Angstroms), deuterium can undergo an exchange reaction with hydrogen.

In US 4,515,612 it is disclosed that the known process of deuterium/hydrogen exchange in vitreous silica containing OH can be applied to silica-based optical fiber preforms (i.e., the bodies from which fibers are drawn), resulting, inter alia, in a lowering of the fiber loss, principally in the wavelength region from about 0.8 to about 1.6 µm, if applied to material containing a nonnegligible amount of hydrogen bonded to oxygen.

However, this approach is based on the substitution of hydrogen by deuterium. In many cases not the preforms but the optical fibers are exposed to hydrogen. The hydrogen may come from external sources, for example, when optical fibers are installed in gas pipes, or internal sources. This may be the case when cable materials corrode and produce hydrogen and/or materials used within the cable construction have already been exposed to hydrogen. Furthermore, salty sea water can interact with metallic cable materials in undersea cables. The hydrogen may diffuse into the SiO₂ structure in which defect centers may exist for instance due to the fiber drawing process, resulting in a direct bonding of p.ex. SiOH. This gives rise to an oszillating frequency within the SiO₂ structure near 1383nm, which results in additional attenuation. Whereas the methods described above suggest a substitution of hydrogen by deuterium, they do not address the passivation of dangling bonds at defect centers which result from the fiber drawing process.

### Object of the invention

It is the object of the invention to provide a method of reducing hydrogen incorporation in an optical fiber.

### Short description of the invention

This object is achieved by a method of fabricating an optical fiber comprising a silica-based glassy material, wherein deuterium is injected in the fiber drawing device.

An optical fiber can be drawn from a preform having a diameter between 15 and more than 100mm, typically having a diameter of 80 - 100 mm. The fiber diameter is typically in the range 0.125 µm - 125 µm. The preform is, in principle, a magnified optical fiber having the same proportions and ratios with respect to refractive indices, core and cladding diameter. Preform and optical fiber consist of silica (SiO₂) doped with germanium (Ge) and/or fluorine (F), depending on the desired refractive index in a particular layer or region. The softening temperature of SiO₂ is 1660°C. SiO₂ is a bad heat conductor. Therefore, the preform can be melted locally and kept just viscous. Hence, optical fibers can be drawn at temperatures of 2000 - 2400°C while keeping the geometrical ratios and the profile of refractive indices. However, drawing the optical fiber at these temperatures and thereby greatly reducing the diameter of the preform causes a large amount of dangling bonds in the optical fiber due to defect centers, i.e. free bonds to which the hydrogen atoms can bond to. The introduction of deuterium into the fiber drawing device, in particular a drawing furnace, leads to the passivation of the dangling bonds by the heavy deuterium atoms. Hence, once the optical fiber leaves the drawing furnace, hardly any defect centers are left in the optical fiber to which hydrogen atoms could bond. The high temperature present during the fiber drawing process leads to a fast diffusion of the deuterium atoms in the SiO₂ which can also be doped. Hence, deuterium can reach defect centers not just in the outer layers of the optical fibers but also in the bulk. Due to the high temperature used for the fiber drawing, deuterium not used for passivating defect centers diffuses out of the fiber. In contrast to the substitution of hydrogen by deuterium the inventive method suggests passivation of defect centers by deuterium before hydrogen can even get there. Hence hydrogen does not have to be knocked out first. Furthermore, in contrast to the state of the art, the inventive method addresses the passivation of defect centers created by the actual fiber drawing process. Advantageously the introduction of deuterium into the optical fiber does not require an additional processing step, since the deuterium is injected in the drawing furnace during fiber drawing, when the preform and thus the optical fiber are heated up anyway. If the individual optical fiber and hence a cable comprising optical fibers is immune to hydrogen because of the incorporated deuterium, hydrogen contending atmospheres, in particular for submarine cables, become obsolete. The expensive filling compounds containing palladium can be avoided.

In a preferred variant of the method the deuterium is injected as part of a gas mixture. Fiber drawing is performed in a controlled atmosphere. To this end, a protective gas is introduced into the fiber drawing device during fiber drawing. An additional gas inlet can be avoided and hence existing fiber drawing devices can be used to perform the inventive method, if the deuterium is added to the protective gas.

If the deuterium is contained in an atmosphere of inert and/or protective gases, for instance in a hydrogen, helium or CO₂ atmosphere, the standard fiber drawing process can be easily modified to perform the inventive method.

In a particularly preferred variant of the inventive method the atmosphere contains about 1% deuterium. This leads to a particularly good and effective occupation of defect centers by deuterium.

In a further advantageous variant of the method deuterium is introduced into the fiber drawing device before and/or after drawing the optical fiber. The fiber drawing device is purged before and after drawing an optical fiber with deuterium. Thus, the amount of hydrogen in the fiber drawing device can be kept at a minimum. Preferably, the deuterium is introduced together with protective gases.

Within the scope of the invention also falls a fiber drawing device which is adapted for use with the inventive method. In particular, the fiber drawing device comprises an inlet for supplying deuterium to the chamber of the oven. Hence, by choice the deuterium can be introduced together with the protective gases or separately at a different location.

The object is also solved by a transport container for transporting a fiber drawn using the inventive method, wherein the transport container contains deuterium. If during transport defect centers at the periphery of the optical fiber are generated due to corrosion or mechanical stress, the defect center can be occupied by deuterium contained in the transport container.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.

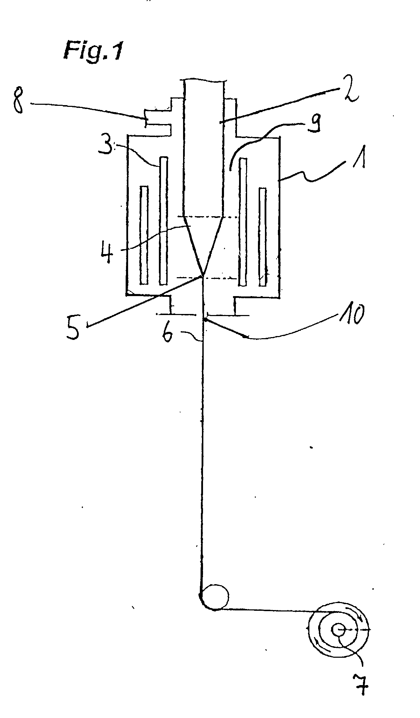

- **Fig. 1**: shows a cross-section of a fiber drawing device.

In **Fig. 1** a fiber drawing device **1,** realized as drawing furnace, is shown, into which a preform **2,** i.e. a silica rod is introduced from the top. The drawing furnace **1** comprises heating elements **3** for locally heating up the preform 2. Where the preform 2 is heated, the preform becomes viscous in the region **4**. The region 4 is conical in shape and ends in a tip **5**. At this point the optical fiber **6** is drawn. The completed optical fiber 6 is rolled onto a spool **7**. During the fiber drawing process a protective gas is introduced through the gas inlet **8**. The protective gas creates a helium atmosphere in the chamber **9** of the oven 1. Together with the protective gas, deuterium is introduced through the gas inlet 8. In the region **4** the preform is reduced from a large diameter to the small diameter of the optical fiber 6. During this process a large amount of defect centers are formed in the optical fiber 6. The deuterium occupies the defect centers before the optical fiber 6 leaves the drawing furnace 1. The protective gas and deuterium not used for passivating defect centers and thus dangling bonds at the defect centers leave through the gas outlet **10.**

In a method of fabricating an optical fiber (6) comprising a silica-based glassy material deuterium is injected in a fiber drawing device (1). Defect centers generated during the fiber drawing are occupied by deuterium atoms.

## Claims

1. Method of fabricating an optical fiber (6) comprising a silica-based glassy material, **characterized in that** deuterium is injected in a fiber drawing device (1).

2. Method according to claim 1, **characterized in that** the deuterium is injected as part of a gas mixture.

3. Method according to claim 1, **characterized in that** the deuterium is contained in an atmosphere of inert and/or appropriate protective gases, in particular a nitrogen, helium or CO₂ atmosphere.

4. Method according to claim 3, **characterized in that** the helium atmosphere contains about 1% deuterium.

5. Method according to claim 1, **characterized in that** deuterium is introduced into the fiber drawing device(1) before and/or after drawing the optical fiber (6).

6. Fiber drawing device (1) for drawing an optical fiber (6) from a preform (2), **characterized in that** the fiber drawing device (1) comprises an inlet (8) for supplying deuterium to the chamber of the fiber drawing device (1 ).

7. Transport container for transporting a fiber drawn according to claim 1, **characterized in that** the transport container contains deuterium.
